# EUROPÄISCHE PATENTSCHRIFT

(11) **EP 2 936 978 B1**
(45) Veröffentlichungstag und Bekanntmachung des Hinweises auf die Patenterteilung: **27.09.2023**
(21) Anmeldenummer: 14165856.7
(22) Anmeldetag: 24.04.2014
(51) Int. Cl.: A01K 3/00, E04H 17/04, E04H 17/14

(54) **Schutzzaun**
Wire fencing
Clôture

(43) Veröffentlichungstag der Anmeldung: 28.10.2015
(73) Patentinhaber: Gallagher Europe B.V., 9723 AZ Groningen (NL)
(72) Erfinder: Meindert, Egbert Dijkstra, 9723 AZ Groningen (NL)
(74) Vertreter: Eisenführ Speiser

(56) Entgegenhaltungen:
- WO-A1-2013/049226
- US-A1- 2011 290 194
- US-A1- 2012 223 283

## Beschreibung

Die vorliegende Erfindung betrifft einen Schutzzaun gemäß Anspruch 1 zum Schutz von Flächen oder Einrichtungen vor Wildtieren, insbesondere Dachsen, mit einem ersten Zaunabschnitt und einem zweiten Zaunabschnitt, wobei der erste Zaunabschnitt und der zweite Zaunabschnitt jeweils einen oder mehrere Drähte aufweisen.

Derartige Schutzzäune finden in verschiedenen Einsatzgebieten Anwendung. Beispielsweise werden landwirtschaftliche Nutzflächen mit derartigen Schutzzäunen eingezäunt, um die auf diesen Flächen weidenden Nutztiere vor den in der Region vorkommenden Wildtieren zu schützen. Insbesondere in der Milchwirtschaft werden Schutzzäune eingesetzt, um Milchkühe vor Wildtieren wie Dachsen, Luchsen, Wildschweinen oder Wölfen zu schützen.

Ein weiteres Anwendungsgebiet ist die Gatterhaltung von Wildtieren, beispielsweise von Damwild oder Sikawild. Schutzzäune werden hier eingesetzt, um schwache Stücke und Kälber vor natürlichen Feinden zu schützen.

Aufgrund der zunehmenden Schwarzwildpopulation werden Schutzzäune auch zur Befriedung von Anbauflächen, insbesondere von Maisanbauflächen benutzt. Die Schutzzäune sollen dabei den Einfall großer Schwarzwildrotten in die Maisschläge verhindern und somit den Landwirt vor erheblichen wirtschaftlichen Schäden schützen. Ferner können Schutzzäune verwendet werden, um die Ausbreitungsfläche von domestizierten Tieren oder Wildtieren zu begrenzen.

Ebenfalls werden Schutzzäune eingesetzt, um ländlich gelegene Einrichtungen vor Schäden zu schützen, welche durch Wildtiere verursacht werden können. Die Verwendung von Schutzzäunen erstreckt sich dabei von dem Schutz von Wohnraum, insbesondere in den Außenbezirken von Städten und Gemeinden über den Schutz von industriell und wirtschaftlich genutzten Flächen bzw. Einrichtungen, wie beispielsweise Forstbetrieben, Stallungen, Biogasanlagen oder Windenergieanlagen.

Die bekannten Schutzzäune bieten jedoch keinen ausreichenden Schutz vor Wildtieren. Es kommt trotz Verwendung von Schutzzäunen immer häufiger zu Schäden, welche durch Wildtiere verursacht werden.

US 2011/290194 A1 oder WO 2013/049226 A1 zeigen Absperrungen bzw. Zaunsysteme zum Schutz von Flächen, wobei die Absperrung bzw. das Zaunsystem jeweils nur einen Zaunabschnitt aufweisen, der ein Tier daran hindert, von einer Fläche, die für das Tier zugänglich ist, zu einer geschützten Fläche bzw. zu einem Bereich zu gelangen.

US 2012/223283 A1 offenbart eine wandelbare Haustiersperre mit einer Vielzahl von Wandelementen, die miteinander über Verbindungsglieder koppelbar sind.

Aufgabe der vorliegenden Erfindung ist es folglich einen Schutzzaun zum Schutz von Flächen oder Einrichtungen vor Wildtieren bereitzustellen, welcher im Vergleich zu den bekannten Schutzzäunen eine erhöhte Schutzwirkung entfaltet.

Die Aufgabe wird durch einen Schutzzaun mit den Merkmalen von Anspruch 1 gelöst.

Die Erfindung macht sich die Erkenntnis zunutze, dass nicht lediglich die Höhe und/oder die vertikale Beabstandung der Zaunelemente für den Grad der Schutzwirkung eines Schutzzauns ausschlaggebend sind, sondern dass ebenfalls die horizontale Beabstandung der einzelnen Zaunelemente einen erheblichen Einfluss auf die Schutzwirkung eines Schutzzauns hat. Durch das Vorsehen einer Gasse zwischen dem ersten Zaunabschnitt und dem zweiten Zaunabschnitt wird der Effekt hervorgerufen, dass Wildtiere zwei aufeinander abgestimmte einzelne Zaunstufen nacheinander überwinden müssen. Somit kann beispielsweise der erste Zaunabschnitt derart ausgebildet sein, dass die Mehrheit der Schaden verursachenden Wildtiere diesen Zaunabschnitt nicht passieren kann. Der zweite Zaunabschnitt des Schutzzauns kann abgestimmt auf den ersten Zaunabschnitt derart ausgebildet sein, dass auch die übrigen Wildarten, welche in der Lage sind, den ersten Zaunabschnitt zu überwinden, durch den zweiten Zaunabschnitt aufgehalten werden. Durch die Beabstandung des ersten Zaunabschnitts von dem zweiten Zaunabschnitt derart, dass zwischen dem ersten Zaunabschnitt und dem zweiten Zaunabschnitt eine Gasse ausgebildet ist, lässt sich überraschend einfach ein Schutzzaun mit einer erheblich gesteigerten Schutzwirkung zum Schutz von Flächen und Einrichtungen vor Wildtieren realisieren.

Der erste Zaunabschnitt weist mehrere im Wesentlichen parallel verlaufende Drähte auf. Alternativ oder zusätzlich weist auch der zweite Zaunabschnitt mehrere im Wesentlichen parallel verlaufende Drähte auf. Vorzugsweise verlaufen die Drähte des ersten Zaunabschnitts dabei parallel zu den Drähten des zweiten Zaunabschnitts. Durch das parallele Anordnen der einzelnen Drähte ist der Aufbau des Schutzzauns erheblich vereinfacht. Ferner reduziert sich durch die parallele Anordnung der einzelnen Drähte die erforderliche Teilevielfalt des Schutzzauns, beispielsweise können einheitliche Stützstrukturen oder Zaunpfähle für die jeweiligen Zaunabschnitte verwendet werden. Hierdurch werden auch die Kosten des Schutzzauns erheblich reduziert.

Bevorzugt ist ferner ein erfindungsgemäßer Schutzzaun, bei welchem die Drähte des ersten Zaunabschnitts in einer ersten Zaunebene angeordnet sind und die Drähte des zweiten Zaunabschnitts in einer zweiten Zaunebene angeordnet sind. Die Schutzwirkung des Schutzzauns wird durch die Anordnung der Drähte in einzelnen Ebenen weiter erhöht. Die Anordnung der einzelnen Drähte innerhalb der jeweiligen Ebenen kann auf spezielle Tierarten ausgelegt sein. Die Anordnung der Drähte des ersten Zaunabschnitts und des zweiten Zaunabschnitts in separaten Ebenen ermöglicht ferner die Realisierung der Passierbarkeit des Schutzzauns für einzelne Wildarten. So kann durch die Anordnung der Drähte eine selektive Passierbarkeit des Schutzzauns für bestimmte Wildarten umgesetzt werden.

Ferner ist ein erfindungsgemäßer Schutzzaun bevorzugt, bei welchem die erste Zaunebene und die zweite Zaunebene parallel zueinander angeordnet sind. Vorzugsweise haben die erste Zaunebene und die zweite Zaunebene dabei eine vertikale Ausrichtung. Ferner kommen jedoch auch weitere Ausrichtungen der Zaunebenen in Betracht, wie beispielsweise eine im Wesentlichen V-förmige Ausrichtung der ersten Zaunebene und der zweiten Zaunebene zueinander. Abhängig davon, welche Tierart am Passieren des Schutzzauns gehindert werden soll, können verschiedene Ausrichtungen vorteilhaft sein.

In einer weiteren bevorzugten Ausführungsform des erfindungsgemäßen Schutzzauns weist die erste Zaunebene und die zweite Zaunebene einen Abstand im Bereich von 250 mm bis 300 mm voneinander auf. Alternativ weist die Gasse zwischen dem ersten Zaunabschnitt und dem zweiten Zaunabschnitt eine Breite im Bereich von 250 mm bis 300 mm auf. Der Abstand zwischen der ersten Zaunebene und der zweiten Zaunebene bzw. die Breite der Gasse zwischen dem ersten Zaunabschnitt und dem zweiten Zaunabschnitt hat einen erheblichen Einfluss auf die Schutzwirkung des Schutzzauns. Bereits die optische Wahrnehmung des Schutzzauns bei den Wildtieren kann dazu führen, dass diese von einem Versuchabsehen, den Schutzzaun zu passieren. Die Beabstandung der Zaunebenen bzw. die Breite der Gasse in einem Bereich von 250 mm bis 300 mm verhindert insbesondere bei Dachsen und Wildschweinen, dass diese den Schutzzaun passieren. Die Gasse ist vorzugsweise so breit, dass die Wildtiere nicht beide Zaunabschnitte auf einmal überspringen können, und gleichzeitig so schmal, dass selbst nach Erreichen der Gasse kein ausreichender Platz vorhanden ist, um einen Anlauf zum Passieren des zweiten Zaunabschnitts zu unternehmen. Da Wildtiere aufgrund der fast flächendeckend vorkommenden Elektrozaunanlagen daran gewöhnt sind, bei Kontakt mit Draht- bzw. Zaunelementen einen elektrischen Schock zu erfahren, sehen Wildtiere vom Passieren eines Schutzzauns, bei welchem es zu einer Berührung mit Drähten kommen kann, ab.

Ferner ist ein erfindungsgemäßer Schutzzaun bevorzugt, bei welchem der vertikale Abstand zwischen den beiden in vertikaler Richtung außenseitig angeordneten Drähten des ersten Zaunabschnitts geringer ist als der vertikale Abstand zwischen den beiden in vertikaler Richtung außenseitig angeordneten Drähten des zweiten Zaunabschnitts. Vorzugsweise ist der erste Zaunabschnitt dabei derart ausgebildet, dass theoretisch die Möglichkeit bestehen würde, dass dieser von einzelnen Wildtieren übersprungen werden könnte. Da sich jedoch an den ersten Zaunabschnitt ein zweiter Zaunabschnitt anschließt, bei welchem der vertikale Abstand zwischen den beiden in vertikaler Richtung außenseitig angeordneten Drähten größer ist als beim ersten Zaunabschnitt, kann verhindert werden, dass Wildtiere den gesamten Schutzzaun überspringen. Insbesondere ist die Gasse zwischen dem ersten Zaunabschnitt und dem zweiten Zaunabschnitt derart ausgebildet, dass es bei einem Überspringen des ersten Zaunabschnitts zwangsläufig zu einem Kontakt des Wildtieres mit mindestens einem Draht kommen würde. Da derartige Größenverhältnisse von einer Vielzahl von Wildtieren eingeschätzt werden können, sieht ein Großteil der Wildtiere bereits von dem Überspringen des ersten Zaunabschnitts ab.

Der bodenseitig angeordnete Draht des zweiten Zaunabschnitts weist einen geringeren Abstand zum Boden auf als der bodenseitig angeordnete Draht des ersten Zaunabschnitts. Dies verhindert, dass Wildtiere nach Überspringen des ersten Zaunabschnitts eine Kriechbewegung zum Passieren des zweiten Zaunabschnitts ausführen. Die Schutzwirkung wird folglich durch eine derartige Anordnung der Drähte weiter erhöht.

Weiterhin ist ein Schutzzaun bevorzugt, bei welchem der oberste Draht des ersten Zaunabschnitts einen geringeren Abstand zum Boden aufweist als der oberste Draht des zweiten Zaunabschnitts. Die hierdurch erzwungene optische Wirkung des Schutzzauns hält viele Wildtiere von einem Versuch diesen Schutzzaun zu überwinden ab.

In einer weiteren bevorzugen Ausführungsform des erfindungsgemäßen Schutzzauns weist der erste Zaunabschnitt zwei Drähte auf und der zweite Zaunabschnitt weist fünf Drähte auf. Durch eine derartige Strukturierung der Drähte können insbesondere Dachse und Wildschweine am Passieren des Schutzzauns gehindert werden. Wildtiere, welche lediglich über einen eingeschränkten Sehsinn verfügen, sind häufig nicht in der Lage die Anordnung der einzelnen Drähte im Raum zu bestimmen. Es kann folglich dazu kommen, dass Wildtiere lediglich die höhere Anzahl an Drähten bzw. die Summe der Drähte des ersten Zaunabschnittes und des zweiten Zaunabschnittes wahrnehmen. Somit kann die Schutzwirkung des Schutzzauns kostengünstig weiter erhöht werden.

In einer weiteren Ausführungsform des erfindungsgemäßen Schutzzauns weist ein Draht des ersten Zaunabschnitts einen Abstand im Bereich von 175 mm bis 275 mm, vorzugsweise 225 mm zum Boden auf. Alternativ oder zusätzlich kann ein Draht des ersten Zaunabschnitts einen Abstand im Bereich von 350 mm bis 625 mm, vorzugsweise 400 mm oder 575 mm zum Boden aufweisen.

Der erfindungsgemäße Schutzzaun wird ferner dadurch vorteilhaft weitergebildet, dass ein Draht des zweiten Zaunabschnitts einen Abstand im Bereich von 100 mm bis 200 mm, vorzugsweise 150 mm zum Boden aufweist. Alternativ oder zusätzlich weist ein Draht des zweiten Zaunabschnitts einen Abstand im Bereich von 250 mm bis 350 mm, vorzugsweise 300 mm zum Boden auf. Alternativ oder zusätzlich weist ein Draht des zweiten Zaunabschnitts einen Abstand im Bereich von 450 mm bis 550 mm, vorzugsweise 500 mm zum Boden auf. Alternativ oder zusätzlich weist ein Draht des zweiten Zaunabschnitts einen Abstand im Bereich von 600 mm bis 700 mm, vorzugsweise 650 mm zum Boden auf. Alternativ oder zusätzlich weist ein Draht des zweiten Zaunabschnitts einen Abstand im Bereich von 850 mm bis 950 mm, vorzugsweise 900 mm zum Boden auf.

In einer weiteren bevorzugten Ausführungsform weist der erfindungsgemäße Schutzzaun mindestens eine bodenseitige Auslage auf, welche sich abschnittsweise oder vollständig unter dem einen oder den mehreren Drähten des ersten Zaunabschnitts und/oder des zweiten Zaunabschnitts erstreckt. Die Auslage kann sowohl dem Schutz und/oder der Funktionalität des Schutzzauns bzw. der Drähte als auch dem Erhöhen der Schutzwirkung des Schutzzauns dienen. Vorzugsweise erstreckt sich die bodenseitige Auslage nicht nur unter dem einen oder den mehreren Drähten des ersten Zaunabschnitts und/oder des zweiten Zaunabschnitts, sondern ebenfalls entlang der Gasse, welche zwischen dem ersten Zaunabschnitt und dem zweiten Zaunabschnitt ausgebildet ist.

In einer weiteren bevorzugten Ausführungsform des erfindungsgemäßen Schutzzauns erstreckt sich die bodenseitige Auslage seitlich von dem einen oder den mehreren Drähten des ersten Zaunabschnitts und/oder des zweiten Zaunabschnitts. Vorzugsweise weist die Auslage eine im Wesentlichen konstante Breite auf. Die Breite der Auslage kann dabei in einem Bereich von 1.000 mm bis 2.000 mm liegen, und beträgt vorzugsweise 1.500 mm. Durch die seitliche Erstreckung der bodenseitigen Auslage kann die Funktion des Schutzzauns gewährleistet werden und die Schutzwirkung weiter erhöht werden.

Der erfindungsgemäße Schutzzaun wird dadurch vorteilhaft weitergebildet, dass die Auslage mehrschichtig ausgebildet ist. Vorzugsweise ist eine Schicht der Auslage als Maschendraht ausgebildet. Die als Maschendraht ausgebildete Schicht der Auslage verhindert, dass Wildtiere den Schutzzaun untergraben und somit passieren. Durch die seitliche Erstreckung wird ein Untergrabungsversuch im Wesentlichen direkt unterbunden. Wildtiere die eine Untergrabung vor der bodenseitigen Auslage beginnen, geben ihre Untergrabungsbemühungen vor dem Durchbruch auf der anderen Zaunseite auf, da die Breite der bodenseitigen Auslage derart gewählt ist, dass zur Untergrabung des Schutzzauns ein ausgeprägter Erdtunnel notwendig wäre. Alternativ oder zusätzlich ist eine Schicht der Auslage als Folie oder Gewebe ausgebildet und dazu eingerichtet, einen Kontakt zwischen Pflanzen und den Drähten des Schutzzauns zu verhindern. Kommt es zu einer Beschickung des Schutzzauns mit elektrischer Spannung, kann auf diese Art und Weise ein Kurzschluss vermieden und somit die Funktionalität des Schutzzauns aufrechterhalten werden. Die Notwenigkeit von Wartungsarbeiten ist somit ebenso wie die durch die Instandhaltung entstehenden Kosten reduziert.

In einer weiteren bevorzugten Ausführungsform des erfindungsgemäßen Schutzzauns weist dieser eine oder mehrere mobile oder stationäre Energiequellen auf, mittels welcher einzelne oder alle Drähte des ersten Zaunabschnitts und/oder des zweiten Zaunabschnitts mit elektrischer Spannung beaufschlagbar sind. Durch das Beaufschlagen der Drähte mit elektrischer Spannung kann die Schutzwirkung erheblich gesteigert werden. Wildtiere, die bereits einmalig mit dem Schutzzaun in Kontakt gekommen sind, unternehmen im Regelfall keinen zweiten Versuch, den Schutzzaun zu passieren.

In einem weiteren Aspekt wird die der Erfindung zugrundeliegende Aufgabe durch eine Verwendung gemäß Anspruch 14 eines Schutzzauns nach einem der Ansprüche 1 bis 13 zum Schutz von Flächen oder Einrichtungen vor Wildtieren, insbesondere Dachsen, gelöst. Hinsichtlich der Vorteile der erfindungsgemäßen Verwendung wird auf die Vorteile des erfindungsgemäßen Schutzzauns verwiesen.

Weitere Merkmale und Vorteile der Erfindung ergeben sich aus der nachfolgenden Beschreibung bevorzugter Ausführungsformen unter Bezugnahme auf Zeichnungen. Es zeigen:
- Fig. 1: einen Abschnitt einer Ausführungsform des erfindungsgemäßen Schutzzauns;
- Fig. 2: einen Abschnitt einer weiteren Ausführungsform des erfindungsgemäßen Schutzzauns;
- Fig. 3: jeweils einen Zaunpfahl des ersten Zaunabschnitts und des zweiten Zaunabschnitts des Schutzzauns aus Fig. 2;
- Fig. 4: einen zweiten Zaunabschnitt einer Ausführungsform des erfindungsgemäßen Schutzzauns;
- Fig. 5: einen ersten Zaunabschnitt einer Ausführungsform des erfindungsgemäßen Schutzzauns;
- Fig. 6: eine Draufsicht auf einen Abschnitt einer Ausführungsform eines erfindungsgemäßen Schutzzauns; und
- Fig. 7: eine Draufsicht auf einen Abschnitt einer weiteren Ausführungsform des erfindungsgemäßen Schutzzauns.

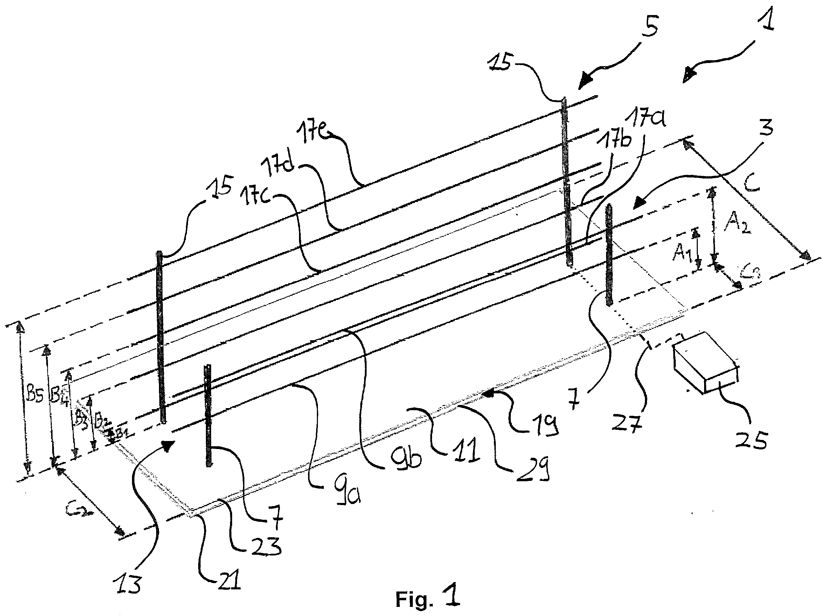

Gemäß Fig. 1 weist der Schutzzaun 1 einen ersten Zaunabschnitt 3 und einen zweiten Zaunabschnitt 5 auf. Der erste Zaunabschnitt 3 des Schutzzauns 1 weist eine Mehrzahl von Zaunpfählen 7 auf, wobei der dargestellte Teil des ersten Zaunabschnitts zwei Zaunpfähle 7 umfasst.

An den Zaunpfählen 7 sind zwei zueinander beabstandete und parallel verlaufende Drähte 9a, 9b befestigt oder geführt. Der Draht 9a weist einen Abstand A₁ zum Boden 11 auf. Der Abstand A₁ zwischen dem Draht 9a und dem Boden 11 ist in einem Bereich von 175 mm bis 275 mm, vorzugsweise 225 mm. Der Draht 9b weist einen Abstand A₂ zu dem Boden 11 auf. Der Abstand A₂ zwischen dem Draht 9b und dem Boden 11 ist im Bereich von 350 mm bis 625 mm, vorzugsweise 400 mm oder 575 mm.

Der zweite Zaunabschnitt 5 ist beabstandet von dem ersten Zaunabschnitt angeordnet. Zwischen dem ersten Zaunabschnitt 3 und dem zweiten Zaunabschnitt 5 ist eine Gasse 13 ausgebildet. Der zweite Zaunabschnitt weist eine Mehrzahl von Zaunpfählen 15 auf, wobei der dargestellte Teil des zweiten Zaunabschnitts 5 zwei Zaunpfähle 15 umfasst.

An den Zaunpfählen 15 des zweiten Zaunabschnitts 5 sind fünf Drähte 17a, 17b, 17c, 17d, 17e befestigt oder geführt. Die Drähte 17a, 17b, 17c, 17d, 17e des zweiten Zaunabschnitts 5 verlaufen parallel zueinander und sind in einer gemeinsamen Zaunebene angeordnet.

Der Draht 17a des zweiten Zaunabschnitts 5 weist einen Abstand B₁ im Bereich von 100 mm bis 200 mm, vorzugsweise 150 mm zum Boden auf. Der Draht 17b des zweiten Zaunabschnitts 5 weist einen Abstand B₂ im Bereich von 250 mm bis 350 mm, vorzugsweise 300 mm zum Boden 11 auf. Der Draht 17c des zweiten Zaunabschnitts 5 weist einen Abstand B₃ im Bereich von 450 mm bis 550 mm, vorzugsweise 500 mm zum Boden 11 auf. Der Draht 17d des zweiten Zaunabschnitts 5 weist einen Abstand B₄ im Bereich von 600 mm bis 700 mm, vorzugsweise 650 mm zum Boden 11 auf. Der Draht 17e des zweiten Zaunabschnitts 5 weist einen Abstand B₅ im Bereich von 850 mm bis 950 mm, vorzugsweise 900 mm zum Boden 11 auf.

Unter den Drähten 9a, 9b des ersten Zaunabschnitts 3 sowie unter den Drähten 17a, 17b, 17c, 17d, 17e des zweiten Zaunabschnitts 5 ist eine bodenseitige Auslage 19 angeordnet. Die bodenseitige Auslage 19 ist mehrschichtig ausgebildet. Eine erste untere Schicht 21 der Auslage 19 ist als Maschendraht ausgebildet. Eine zweite obere Schicht 23 der Auslage 19 ist als Folie oder Gewebe ausgebildet und dazu eingerichtet, einen Kontakt zwischen Pflanzen und Drähten zu verhindern. Die bodenseitige Auslage 19 erstreckt sich seitlich von den Drähten 9a, 9b des ersten Zaunabschnitts 3 und den Drähten 17a, 17b, 17c, 17d, 17e des zweiten Zaunabschnitts 5. Die Auslage 19 weist eine im Wesentlichen konstante Breite C im Bereich von 1.000 mm bis 2.000 mm, vorzugsweise 1.500 mm auf. Der Abstand C₁ zwischen der Längskante 29 der bodenseitigen Auslage 19 ist im Bereich von 750 mm bis 1.250 mm, vorzugsweise 1.000 mm. Der Abstand C₂ zwischen der Längskante 29 der bodenseitigen Auslage 19 ist im Bereich von 1.000 mm bis 1.500 mm, vorzugsweise 1.250 mm. Die Breite der Gasse 19 liegt im Bereich von 200 mm bis 350 mm, vorzugsweise 250 mm oder 300 mm.

Der Schutzzaun 1 weist ferner eine mobile Energiequelle 25 auf, welche über elektrische Leitungen 27 mit einem oder mehreren Drähten 9a, 9b, 17a, 17b, 17c, 17d, 17e des ersten Zaunabschnitts 3 und/oder des zweiten Zaunabschnitts 5 gekoppelt ist. Mittels der mobilen Energiequelle 25 lassen sich folglich einzelne oder alle Drähte 9a, 9b, 17a, 17b, 17c, 17d, 17e des ersten Zaunabschnitts 3 und/oder des zweiten Zaunabschnitt 5 mit elektrischer Spannung beaufschlagen.

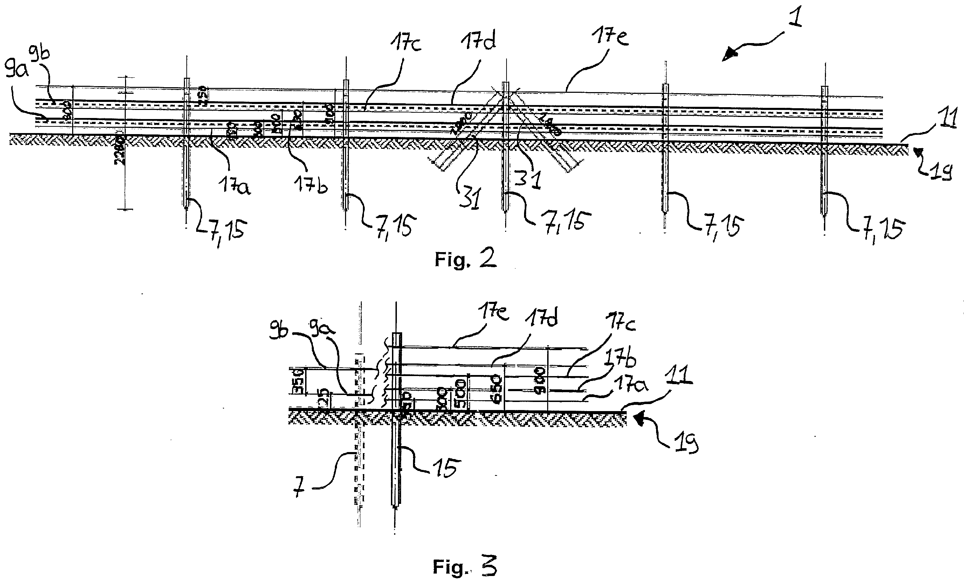

Fig. 2 und Fig. 3 zeigen eine weitere Ausführungsform des erfindungsgemäßen Schutzzauns 1. Der erste Zaunabschnitt des dargestellten Schutzzauns 1 weist zwei Drähte 9a, 9b auf. Der zweite Zaunabschnitt weist fünf Drähte 17a, 17b, 17c, 17d, 17e auf. Die Drähte 9a, 9b des ersten Zaunabschnitts sind an Zaunpfählen 7 befestigt oder geführt. Die Drähte 17a, 17b, 17c, 17d, 17e des zweiten Zaunabschnitts sind an Zaunpfählen 15 befestigt oder geführt. Die Zaunpfähle 7 des ersten Zaunabschnitts weisen eine geringere Höhe als die Zaunpfähle 15 des zweiten Zaunabschnitts auf. Die Zaunpfähle 7 des ersten Zaunabschnitts sowie die Zaunpfähle 15 des zweiten Zaunabschnitts erstrecken sich um den gleichen Betrag in das Erdreich unterhalb des Bodens 11. Die Zaunpfähle 7 des ersten Zaunabschnitts und die Zaunpfähle 15 des zweiten Zaunabschnitts sind im Wesentlichen äquidistant voneinander beabstandet. Der Abstand zwischen einzelnen Zaunpfählen in Richtung der Drähte beträgt etwa 3 m.

Einige Zaunpfähle 7, 15 können zusätzliche Stützpfähle 31 aufweisen, welche schräg zu den Drähten 9a, 9b, 17a, 17b, 17c, 17d, 17e und schräg zu den Zaunpfählen 7, 15 verlaufen. Die zusätzlichen Stützpfähle 31 sind ebenfalls in das Erdreich unterhalb des Bodens 11 eingeschlagen.

Der Draht 9a weist einen Abstand von 225 mm zum Boden 11 auf. Der Draht 9b weist einen Abstand von 350 mm zum Boden auf. Der Draht 17a weist einen Abstand von 150 mm zum Boden 11 auf. Der Draht 17b weist einen Abstand von 300 mm zum Boden 11 auf. Der Draht 17c weist einen Abstand von 500 mm zum Boden 11 auf. Der Draht 17d weist einen Abstand von 650 mm zum Boden 11 auf. Der Draht 17e weist einen Abstand von 900 mm zum Boden 11 auf.

Auf dem Boden befindet sich eine zweischichtige bodenseitige Auslage 19, wobei eine Schicht der bodenseitigen Auslage als Maschendraht und eine Schicht der bodenseitigen Auslage als Folie oder Gewebe ausgebildet ist, welche dazu eingerichtet ist, einen Kontakt zwischen Pflanzen und den Drähten 9a, 9b, 17a, 17b, 17c, 17d, 17e zu verhindern.

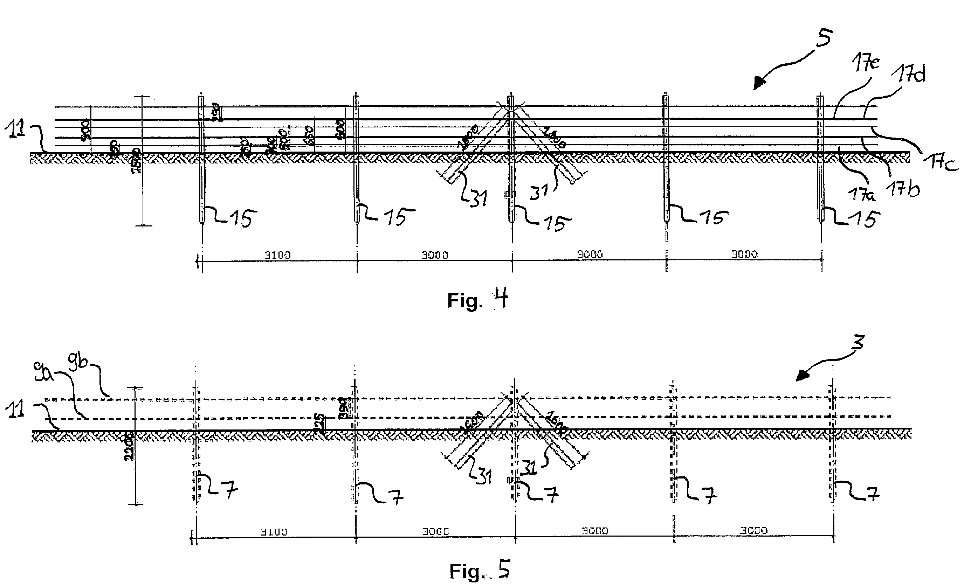

Fig. 4 zeigt einen zweiten Zaunabschnitt 5 einer Ausführungsform eines erfindungsgemäßen Schutzzauns. Der dargestellte zweite Zaunabschnitt stimmt im Wesentlichen mit dem zweiten Zaunabschnitt des Schutzzauns 1 aus Fig. 2 überein.

Fig. 5 zeigt einen ersten Zaunabschnitt einer Ausführungsform eines erfindungsgemäßen Schutzzauns. Der dargestellte erste Zaunabschnitt 3 stimmt im Wesentlichen mit dem ersten Zaunabschnitt des Schutzzauns 1 aus Fig. 2 überein.

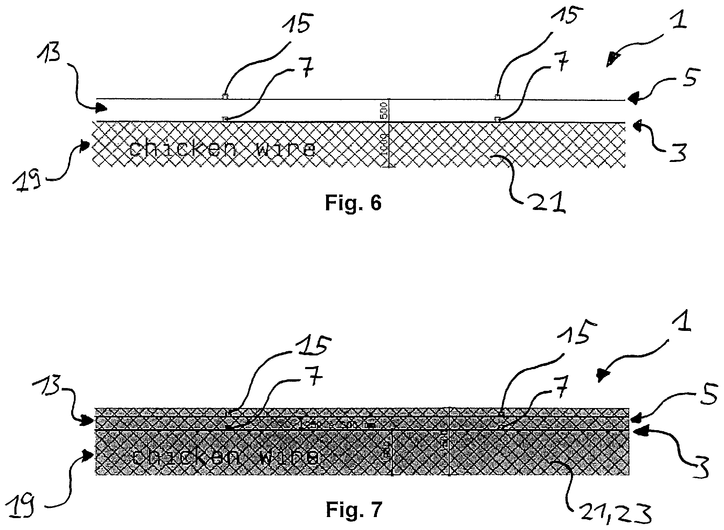

Fig. 6 zeigt eine Draufsicht einer Ausführungsform des erfindungsgemäßen Schutzzauns 1. Die Drähte des ersten Zaunabschnitts 3 sind beabstandet zu den Drähten des zweiten Zaunabschnitts 5 angeordnet, so dass eine Gasse 13 zwischen den Drähten des ersten Zaunabschnitts 3 und den Drähten des zweiten Zaunabschnitts 5 ausgebildet ist.

Die Drähte des ersten Zaunabschnitts 3 sind an Zaunpfählen 7 befestigt oder geführt. Die Drähte des zweiten Zaunabschnitts 5 sind an Zaunpfählen 15 befestigt oder geführt. Der Abstand zwischen den Zaunpfählen 7 des ersten Zaunabschnitts 3 und den Zaunpfählen 15 des zweiten Zaunabschnitts 5 beträgt 500 mm. Eine bodenseitige Auslage 19 erstreckt sich seitlich von den Drähten des ersten Zaunabschnitts 3. Die bodenseitige Auslage 19 weist eine im Wesentlichen konstante Breite von 1000 mm auf und ist als Maschendraht ausgebildet.

Fig. 7 zeigt ebenfalls eine Draufsicht auf eine weitere Ausführungsform des erfindungsgemäßen Schutzzauns 1. Die Drähte des ersten Zaunabschnitts 3 sind beabstandet von den Drähten des zweiten Zaunabschnitts 5 angeordnet und bilden eine Gasse 13 mit einer Breite im Bereich von 250 mm bis 300 mm aus. Die mehrschichtig ausgebildete bodenseitige Auslage 19 erstreckt sich sowohl seitlich von den Drähten des ersten Zaunabschnitts 3 als auch seitlich von den Drähten des zweiten Zaunabschnitts 5. Die bodenseitige Auslage weist eine im Wesentlichen konstante Breite von 1500 mm auf und ist zweischichtig ausgebildet. Eine erste Schicht ist als Maschendraht ausgebildet. Eine zweite Schicht ist als Folie oder Gewebe ausgebildet und dazu eingerichtet einen Kontakt zwischen Pflanzen und Drähten zu vermeiden.

### Bezugsziffern

- 1: Schutzzaun
- 3: erster Zaunabschnitt
- 5: zweiter Zaunabschnitt
- 7: Zaunpfähle des ersten Zaunabschnitts
- 9a, 9b: Drähte des ersten Zaunabschnitts
- 11: Boden
- 13: Gasse
- 15: Zaunpfähle des zweiten Zaunabschnitts
- 17a, 17b, 17c, 17d, 17e: Drähte des zweiten Zaunabschnitts
- 19: bodenseitige Auslage
- 21: Schicht der bodenseitigen Auslage
- 23: Schicht der bodenseitigen Auslage
- 25: mobile Energiequelle
- 27: elektrische Leitung
- 29: Längskante der bodenseitigen Auslage
- 31: Stützpfähle

## Patentansprüche

1. Schutzzaun (1) zum Schutz von Flächen oder Einrichtungen vor Wildtieren, insbesondere Dachsen,
mit einem ersten Zaunabschnitt (3) und einem zweiten Zaunabschnitt (5), wobei der erste Zaunabschnitt (3) und der zweite Zaunabschnitt jeweils einen oder mehrere Drähte (9a, 9b, 17a, 17b, 17c, 17d, 17e) aufweisen,
wobei der erste Zaunabschnitt (3) und der zweite Zaunabschnitt derart voneinander beabstandet angeordnet sind, dass zwischen dem ersten Zaunabschnitt (3) und dem zweiten Zaunabschnitt (5) eine Gasse (13) und zwei aufeinander abgestimmte einzelne nacheinander zu überwindende Zaunstufen ausgebildet sind, wobei
der erste Zaunabschnitt (3) mehrere im Wesentlichen parallel verlaufende Drähte (9a, 9b) aufweist und/oder der zweite Zaunabschnitt (5) mehrere im Wesentlichen parallel verlaufende Drähte (17a, 17b, 17c, 17d, 17e) aufweist, wobei die Drähte (9a, 9b) des ersten Zaunabschnitts (3) vorzugsweise im Wesentlichen parallel zu den Drähten (17a, 17b, 17c, 17d, 17e) des zweiten Zaunabschnitts (5) verlaufen,
**dadurch gekennzeichnet, dass** der bodenseitig angeordnete Draht (17a) des zweiten Zaunabschnitts (5) einen geringeren Abstand zum Boden (11) aufweist als der bodenseitig angeordnete Draht (9a) des ersten Zaunabschnitts (3).

2. Schutzzaun (1) nach Anspruch 1,
**dadurch gekennzeichnet, dass** die Drähte (9a, 9b) des ersten Zaunabschnitts (3) in einer ersten Zaunebene angeordnet sind und die Drähte (17a, 17b, 17c, 17d, 17e) des zweiten Zaunabschnitts (5) in einer zweiten Zaunebene angeordnet sind.

3. Schutzzaun (1) nach Anspruch 2,
**dadurch gekennzeichnet, dass** die erste Zaunebene und die zweite Zaunebene parallel zueinander angeordnet sind und vorzugsweise eine im Wesentlichen vertikale Ausrichtung haben.

4. Schutzzaun (1) nach Anspruch 3,
**dadurch gekennzeichnet, dass** die erste Zaunebene und die zweite Zaunebene einen Abstand im Bereich von 250 mm bis 300 mm voneinander aufweisen oder die Gasse (13) zwischen dem ersten Zaunabschnitt (3) und dem zweiten Zaunabschnitt (5) eine Breite im Bereich von 250 mm bis 300 mm aufweist.

5. Schutzzaun (1) nach einem der Ansprüche 1 bis 4,
**dadurch gekennzeichnet, dass** der vertikale Abstand zwischen den beiden in vertikaler Richtung außenseitig angeordneten Drähten (9a, 9b) des ersten Zaunabschnitts (3) geringer ist als der vertikale Abstand zwischen den beiden in vertikaler Richtung außenseitig angeordneten Drähten (17a, 17b, 17c, 17d, 17e) des zweiten Zaunabschnitts (5).

6. Schutzzaun (1) nach einem der Ansprüche 1 bis 5,
**dadurch gekennzeichnet, dass** der oberste Draht (9b) des ersten Zaunabschnitts (3) einen geringeren Abstand zum Boden (11) aufweist als der oberste Draht (17e) des zweiten Zaunabschnitts (5).

7. Schutzzaun (1) nach einem der Ansprüche 1 bis 6,
**dadurch gekennzeichnet, dass** der erste Zaunabschnitt (3) zwei Drähte (9a, 9b) aufweist und der zweite Zaunabschnitt (5) fünf Drähte (17a, 17b, 17c, 17d, 17e) aufweist.

8. Schutzzaun (1) nach einem der Ansprüche 1 bis 7,
**dadurch gekennzeichnet, dass** ein Draht des erstens Zaunabschnitts (3) einen Abstand im Bereich von 175 mm bis 275 mm, vorzugsweise 225 mm, zum Boden (11) aufweist und/oder ein Draht des erstens Zaunabschnitts (3) einen Abstand im Bereich von 350 mm bis 625 mm, vorzugsweise 400 mm oder 575 mm, zum Boden (11) aufweist.

9. Schutzzaun (1) nach einem der Ansprüche 1 bis 8,
**dadurch gekennzeichnet, dass** ein Draht des zweiten Zaunabschnitts (5) einen Abstand im Bereich von 100 mm bis 200 mm, vorzugsweise 150 mm, zum Boden (11) aufweist und/oder ein Draht des zweiten Zaunabschnitts (5) einen Abstand im Bereich von 250 mm bis 350 mm, vorzugsweise 300 mm, zum Boden (11) aufweist und/oder ein Draht des zweiten Zaunabschnitts (5) einen Abstand im Bereich von 450 mm bis 550 mm, vorzugsweise 500 mm, zum Boden (11) aufweist und/oder ein Draht des zweiten Zaunabschnitts (5) einen Abstand im Bereich von 600 mm bis 700 mm, vorzugsweise 650 mm, zum Boden (11) aufweist und/oder ein Draht des zweiten Zaunabschnitts (5) einen Abstand im Bereich von 850 mm bis 950 mm, vorzugsweise 900 mm, zum Boden (11) aufweist.

10. Schutzzaun (1) nach einem der vorstehenden Ansprüche,
**gekennzeichnet durch** mindestens eine bodenseitige Auslage (19), welche sich abschnittsweise oder vollständig unter dem einen oder den mehreren Drähten (9a, 9b, 17a, 17b, 17c, 17d, 17e) des ersten Zaunabschnitts (3) und/oder des zweiten Zaunabschnitts (5) erstreckt.

11. Schutzzaun (1) nach Anspruch 10,
**dadurch gekennzeichnet, dass** die bodenseitige Auslage (19) sich seitlich von dem einen oder den mehreren Drähten (9a, 9b, 17a, 17b, 17c, 17d, 17e) des ersten Zaunabschnitts (3) und/oder des zweiten Zaunabschnitts (5) erstreckt, wobei die Auslage (19) vorzugsweise eine im Wesentlichen konstante Breite im Bereich von 1.000 mm bis 2.000 mm, vorzugsweise 1500 mm aufweist.

12. Schutzzaun (1) nach Anspruch 10 oder 11,
**dadurch gekennzeichnet, dass** die Auslage (19) mehrschichtig ausgebildet ist, wobei vorzugsweise eine Schicht (21) der Auslage (19) als Maschendraht ausgebildet ist und/oder eine Schicht (23) der Auslage (19) als Folie oder Gewebe ausgebildet und dazu eingerichtet ist einen Kontakt zwischen Pflanzen und den Drähten (9a, 9b, 17a, 17b, 17c, 17d, 17e) zu verhindern.

13. Schutzzaun (1) nach einem der vorstehenden Ansprüche,
**gekennzeichnet durch** eine oder mehrere mobile oder stationäre Energiequellen (25), mittels welcher einzelne oder alle Drähte (9a, 9b, 17a, 17b, 17c, 17d, 17e) des ersten Zaunabschnitts (3) und/oder des zweiten Zaunabschnitts (5) mit elektrischer Spannung beaufschlagbar sind.

14. Verwendung eines Schutzzauns (1) nach einem der Ansprüche 1 bis 13 zum Schutz von Flächen oder Einrichtungen vor Wildtieren, insbesondere Dachsen.

## Claims

1. Protective fence (1) for protecting surfaces or facilitiesfrom wild animals, in particular badgers,
having a first fence portion (3) and a second fence portion (5), wherein the first fence portion (3) and the second fence portion each have one or more wires (9a, 9b, 17a, 17b, 17c, 17d, 17e),
wherein the first fence portion (3) and the second fence portion are arranged with spacing from each other in such a manner that between the first fence portion (3) and the second fence portion (5) a passage (13) and two individual fence stages which are adapted to each other and which are intended to be passed one after the other are formed, wherein the first fence portion (3) comprises a plurality of wires (9a, 9b) which extend in a substantially parallel manner and/or the second fence portion (5) comprises a plurality of wires (17a, 17b, 17c, 17d, 17e) which extend in a substantially parallel manner, wherein the wires (9a, 9b) of the first fence portion (3) preferably extend substantially parallel with the wires (17a, 17b, 17c, 17d, 17e) of the second fence portion (5), **characterised in that** the bottom wire (17a) of the second fence portion (5) has a smaller spacing with respect to the ground (11) than the bottom wire (9a) of the first fence portion (3).

2. Protective fence (1) according to claim 1,
**characterised in that** the wires (9a, 9b) of the first fence portion (3) are arranged in a first fence plane and the wires (17a, 17b, 17c, 17d, 17e) of the second fence portion (5) are arranged in a second fence plane.

3. Protective fence (1) according to claim 2,
**characterised in that** the first fence plane and the second fence plane are arranged parallel to one another and preferably have a substantially vertical orientation.

4. Protective fence (1) according to claim 3,
**characterised in that** the first fence plane and the second fence plane have a spacing in the range from 250 mm to 300 mm with respect to each other or the passage (13) has a width between the first fence portion (3) and the second fence portion (5) in the range from 250 mm to 300 mm.

5. Protective fence (1) according to any one of claims 1 to 4,
**characterised in that** the vertical spacing between the two vertically outer wires (9a, 9b) of the first fence portion (3) is smaller than the vertical spacing between the two vertically outer wires (17a, 17b, 17c, 17d, 17e) of the second fence portion (5).

6. Protective fence (1) according to any one of claims 1 to 5,
**characterised in that** the uppermost wire (9b) of the first fence portion (3) has a smaller spacing with respect to the ground (11) than the uppermost wire (17e) of the second fence portion (5).

7. Protective fence (1) according to any one of claims 1 to 6,
**characterised in that** the first fence portion (3) comprises two wires (9a, 9b) and the second fence portion (5) comprises five wires (17a, 17b, 17c, 17d, 17e).

8. Protective fence (1) according to any one of claims 1 to 7,
**characterised in that** a wire of the first fence portion (3) has a spacing in the range from 175 to 275 mm, preferably 225 mm, with respect to the ground (11), and/or a wire of the first fence portion (3) has a spacing in the range from 350 mm to 625 mm, preferably 400 mm or 575 mm, with respect to the ground (11).

9. Protective fence (1) according to any one of claims 1 to 8,
**characterised in that** a wire of the second fence portion (5) has a spacing in the range from 100 mm to 200 mm, preferably 150 mm, with respect to the ground (11), and/or
a wire of the second fence portion (5) has a spacing in the range from 250 mm to 350 mm, preferably 300 mm, with respect to the ground (11), and/or
a wire of the second fence portion (5) has a spacing in the range from 450 mm to 550 mm, preferably 500 mm, with respect to the ground (11), and/or
a wire of the second fence portion (5) has a spacing in the range from 600 mm to 700 mm, preferably 650 mm, with respect to the ground (11), and/or
a wire of the second fence portion (5) has a spacing in the range from 850 mm to 950 mm, preferably 900 mm, with respect to the ground (11).

10. Protective fence (1) according to any one of the preceding claims,
**characterised by** at least one bottom lay-up (19) which extends partially or completely below the one or more wires (9a, 9b, 17a, 17b, 17c, 17d, 17e) of the first fence portion (3) and/or the second fence portion (5).

11. Protective fence (1) according to claim 10,
**characterised in that** the bottom lay-up (19) extends laterally from the one or more wires (9a, 9b, 17a, 17b, 17c, 17d, 17e) of the first fence portion (3) and/or the second fence portion (5), wherein the lay-up (19) preferably has a substantially constant width in the range from 1000 mm to 2000 mm, preferably 1500 mm.

12. Protective fence (1) according to claim 10 or 11,
**characterised in that** the lay-up (19) is formed with multiple layers, wherein preferably one layer (21) of the span (19) is formed as a wire mesh and/or one layer (23) of the span (19) is formed as a sheet or webbing and is configured to prevent contact between plants and the wires (9a, 9b, 17a, 17b, 17c, 17d, 17e).

13. Protective fence (1) according to any one of the preceding claims,
**characterised by** one or more mobile or stataionary energy sources (25) by means of which individual wires or all wires (9a, 9b, 17a, 17b, 17c, 17d, 17e) of the first fence portion (3) and/or of the second fence portion (5) can be supplied with electrical voltage.

14. Use of a protective fence (1) according to any one of claims 1 to 13 to protect surfaces or facilities from wild animals, in particular badgers.

## Revendications

1. Clôture de protection (1) pour protéger des surfaces ou des équipements contre les animaux sauvages, en particulier des blaireaux,
avec une première section de clôture (3) et une deuxième section de clôture (5), dans laquelle la première section de clôture (3) et la deuxième section de clôture présentent respectivement un ou plusieurs fils métalliques (9a, 9b, 17a, 17b, 17c, 17d, 17e),
dans laquelle
la première section de clôture (3) et la deuxième section de clôture sont disposées de manière espacée l'une de l'autre de telle manière qu'un passage (13) est formé entre la première section de clôture (3) et la deuxième section de clôture (5) et deux étages de clôture adaptés l'un à l'autre et à surmonter l'un après l'autre sont réalisés, dans laquelle la première section de clôture (3) présente plusieurs fils métalliques (9a, 9b) s'étendant sensiblement de manière parallèle et/ou la deuxième section de clôture (5) présente plusieurs fils métalliques (17a, 17b, 17c, 17d, 17e) s'étendant sensiblement de manière parallèle, dans laquelle les fils métalliques (9a, 9b) de la première section de clôture (3) s'étendent de préférence de manière parallèle aux fils métalliques (17a, 17b, 17c, 17d, 17e) de la deuxième section de clôture (5), **caractérisée en ce que** le fil métallique disposé côté sol (17a) de la deuxième section de clôture (5) présente un espacement par rapport au sol (11) inférieur au fil métallique disposé côté sol (9a) de la première section de clôture (3).

2. Clôture de protection (1) selon la revendication 1,
**caractérisée en ce que** les fils métalliques (9a, 9b) de la première section de clôture (3) sont disposés dans un premier plan de clôture et les fils métalliques (17a, 17b, 17c, 17d, 17e) de la deuxième section de clôture (5) sont disposés dans un deuxième plan de clôture.

3. Clôture de protection (1) selon la revendication 2,
**caractérisée en ce que** le premier plan de clôture et le deuxième plan de clôture sont disposés de manière parallèle l'un par rapport à l'autre et ont de préférence une orientation sensiblement verticale.

4. Clôture de protection (1) selon la revendication 3,
**caractérisée en ce que** le premier plan de clôture et le deuxième plan de clôture présentent un espacement l'un de l'autre dans la plage de 250 mm à 300 mm ou le passage (13) entre la première section de clôture (3) et la deuxième section de clôture (5) présente une largeur dans la plage de 250 mm à 300 mm.

5. Clôture de protection (1) selon l'une quelconque des revendications 1 à 4,
**caractérisée en ce que** l'espacement vertical entre les deux fils métalliques (9a, 9b) disposés verticalement extérieurs de la première section de clôture (3) est inférieur à l'espacement vertical entre les deux fils métalliques (17a, 17b, 17c, 17d, 17e) disposés verticalement extérieurs de la deuxième section de clôture (5).

6. Clôture de protection (1) selon l'une quelconque des revendications 1 à 5,
**caractérisée en ce que** le fil métallique le plus haut (9b) de la première section de clôture (3) présente un espacement par rapport au sol (11) inférieur au fil métallique le plus haut (17e) de la deuxième section de clôture (5).

7. Clôture de protection (1) selon l'une quelconque des revendications 1 à 6,
**caractérisée en ce que** la première section de clôture (3) présente deux fils métalliques (9a, 9b) et la deuxième section de clôture (5) présente cinq fils métalliques (17a, 17b, 17c, 17d, 17e).

8. Clôture de protection (1) selon l'une quelconque des revendications 1 à 7,
**caractérisée en ce qu'**un fil métallique de la première section de clôture (3) présente un espacement par rapport au sol (11) dans la plage de 175 mm à 275 mm, de préférence de 225 mm, et/ou un fil métallique de la première section de clôture (3) présente un espacement par rapport au sol (11) dans la plage de 350 mm à 625 mm, de préférence de 400 mm ou de 575 mm.

9. Clôture de protection (1) selon l'une quelconque des revendications 1 à 8,
**caractérisée en ce qu'**un fil métallique de la deuxième section de clôture (5) présente un espacement par rapport au sol (11) dans la plage de 100 mm à 200 mm, de préférence de 150 mm, et/ou un fil métallique de la deuxième section de clôture (5) présente par rapport au sol (11) un espacement dans la plage de 250 mm à 350 mm, de préférence de 300 mm, et/ou un fil métallique de la deuxième section de clôture (5) présente par rapport au sol (11) un espacement dans la plage de 450 mm à 550 mm, de préférence de 500 mm, et/ou un fil métallique de la deuxième section de clôture (5) présente par rapport au sol (11) un espacement dans la plage de 600 mm à 700 mm, de préférence de 650 mm, et/ou un fil métallique de la deuxième section de clôture (5) présente par rapport au sol (11) un espacement dans la plage de 850 mm à 950 mm, de préférence de 900 mm.

10. Clôture de protection (1) selon l'une quelconque des revendications précédentes, **caractérisée par** au moins un lay-up (19) côté sol, lequel s'étend par endroits ou totalement sous l'un ou les plusieurs fils métalliques (9a, 9b, 17a, 17b, 17c, 17d, 17e) de la première section de clôture (3) et/ou de la deuxième section de clôture (5).

11. Clôture de protection (1) selon la revendication 10,
**caractérisée en ce que** le lay-up (19) côté sol s'étend sur le côté depuis l'un ou les plusieurs fils métalliques (9a, 9b, 17a, 17b, 17c, 17d, 17e) de la première section de clôture (3) et/ou de la deuxième section de clôture (5), cependant le lay-up (19) présente de préférence une largeur sensiblement constante dans la plage de 1000 mm à 2000 mm, de préférence de 1500 mm.

12. Clôture de protection (1) selon la revendication 10 ou 11,
**caractérisée en ce que** le lay-up (19) est réalisé en plusieurs couches, cependant de préférence une couche (21) du lay-up (19) est réalisée en tant que fil métallique en grillage et/ou une couche (23) du lay-up (19) est réalisée en tant que feuille ou tissu, et est configurée pour empêcher un contact entre des plantes et les fils métalliques (9a, 9b, 17a, 17b, 17c, 17d, 17e).

13. Clôture de protection (1) selon l'une quelconque des revendications précédentes, **caractérisée par** une ou plusieurs sources d'énergie (25) mobiles ou stationnaires, au moyen de laquelle/desquelles individuels, ou tous les, fils métalliques (9a, 9b, 17a, 17b, 17c, 17d, 17e) de la première section de clôture (3) et/ou de la deuxième section de clôture (5) peuvent être alimentés en tension électrique.

14. Utilisation d'une clôture de protection (1) selon l'une quelconque des revendications 1 à 13 pour protéger des surfaces ou des équipements contre des animaux sauvages, en particulier des blaireaux.
